# EUROPÄISCHE PATENTSCHRIFT

(11) **EP 2 609 305 B1**
(45) Veröffentlichungstag und Bekanntmachung des Hinweises auf die Patenterteilung: **12.11.2014**
(21) Anmeldenummer: 12723638.8
(22) Anmeldetag: 16.05.2012
(51) Int. Cl.: F01N 13/18, F01N 13/10, F01N 13/14

(54) **SAMMLER FÜR KRÜMMERROHRE**
HEADER FOR CURVED PIPES
COLLECTEUR POUR TUBES DE COLLECTEUR

(30) Priorität: 18.05.2011 DE 102011101947
(43) Veröffentlichungstag der Anmeldung: 03.07.2013
(73) Patentinhaber: Tenneco GmbH, 67480 Edenkoben (DE)
(72) Erfinder: GORENFLO, Björn, 76297 Stutensee (DE)
(74) Vertreter: Thews, Gustav
(86) Internationale Anmeldenummer: PCT/EP2012/059140
(87) Internationale Veröffentlichungsnummer: WO 2012/156454

(56) Entgegenhaltungen:
- EP-A1- 0 748 928
- EP-A1- 2 184 462
- DE-A1- 3 925 802
- DE-A1- 10 301 395
- FR-A- 1 286 368

## Beschreibung

Die Erfindung bezieht sich auf einen Sammler bzw. ein Kopplungselement für mehrere abgasführende Krümmerrohre eines Kfz mit einer ersten Schale und einer zweiten Schale, die über einen eine Verbindungsebene E bildende stoff- oder formschlüssige Schalenverbindung dichtend miteinander verbindbar sind, mit mindestens einem Auslassstutzen zum Anschließen an ein Abgasrohr einer Abgasanlage und mit mehreren Krümmeranschlussstutzen zum Anschließen der Krümmerrohre, wobei der Auslassstutzen als Durchzug innerhalb der jeweiligen Schale ausgebildet ist. Der Durchzug ist im Gegensatz zu einer nachstehend beschriebenen Ausformung als Loch ausgebildet, mithin auf eine Schale beschränkt. Bei mehreren Auslassstutzen können diese, mithin die jeweiligen Durchzüge auf eine Schale oder auf beide Schalen verteilt sein.

EP 1 329 607 A2 beschreibt einen Haubenkrümmer, dessen gasführender Innenrohr-Krümmer aus T-förmigen, einteiligen Leitungssträngen gebildet ist. Dabei schließt der jeweils vordere Leitungsstrang an den nachfolgenden Leitungsstrang an. Ein Sammler für mehrere Krümmer wird nicht beschrieben.

In EP 0 748 928 B1 ist eine aus Blechschalen gebildete Krümmer-Sammler-Anordnung beschrieben, die zum Anschluss von vier Krümmerrohren mehrere durch Ausformung beider Blechschalen im Bereich der Verbindungsebene gebildete Krümmeranschlussstutzen sowie einen durch die Blechschalen gebildeter Auslassstutzen zum Anschließen an ein Abgasrohr einer Abgasanlage aufweist.

Aus der DE 103 01 395 A1 ist ebenfalls ein aus Blechschalen gebildeter Krümmer-Sammler beschrieben, der zum Anschluss von vier Krümmerrohren mehrere durch Ausformung beider Blechschalen im Bereich der Verbindungsebene gebildete Krümmeranschlussstutzen aufweist. Der Auslassstutzen zum Anschließen an ein Abgasrohr einer Abgasanlage ist als Durchzug innerhalb der unteren Blechschale ausgebildet.

Der Erfindung liegt die Aufgabe zugrunde, einen Sammler derart auszubilden und anzuordnen, dass platzsparende Anschlussgeometrien gewährleistet sind.

Gelöst wird die Aufgabe erfindungsgemäß dadurch, dass mindestens ein erster Krümmeranschlussstutzen vorgesehen ist, der als Durchzug innerhalb nur einer der beiden Schalen ausgebildet ist. Der Durchzug ist zwar bezüglich seiner Herstellung etwas aufwendiger als eine klassische Ausformung im Bereich der Verbindungsebene E. Durch Platzierung des Krümmeranschlussstutzens mit vorzugsweise vertikalem Abstand zu der Verbindungsebene E ist eine Platzierung des Krümmeranschlussstutzens auf einer anderen Höhe des Sammlers möglich, was wesentlich mehr Flexibilität bei der Krümmerrohr- und Sammlerarchitektur bietet. Dies gewährleistet mitunter auch eine kompaktere und damit leichtere Bauweise der Krümmer-Sammler-Baugruppe insgesamt. Bei den Schalen handelt es sich vorzugsweise um Blechschalen.

Vorteilhaft kann es hierzu auch sein, wenn mindestens ein zweiter Krümmeranschlussstutzen vorgesehen ist, der als Ausformung beider Schalen im Bereich eines Schalenrandes ausgebildet und in der Verbindungsebene E angeordnet ist. Ein solcher Krümmeranschlussstutzen wird somit durch beide Schalen gebildet bzw. gefasst. Ein weiterer Krümmeranschlussstutzen als Ausformung gewährleistet eine größtmögliche Flexibilität bei der Anordnung der Krümmeranschlussstutzen an den Schalen, mithin für die Architektur der Baugruppe insgesamt, weil die Krümmeranschlussstutzen auf verschiedenen Höhen angeordnet werden können. Die Ausformung unterscheidet sich von dem Durchzug dadurch, dass sie während des Tiefziehens einer jeweiligen Blechschale durch eine halbrunde Einformung beider Blechschalen im Schalenrand erzeugt werden kann. Dem Durchzug innerhalb nur einer Schale liegt dagegen eine Materialausnehmung der Schale zugrunde, die die Öffnung des Durchzuges bildet. Die Verbindungsebene E ist vorzugsweise flach ausgebildet. Sie kann aber grundsätzlich auch gewölbt oder gewellt, mithin nicht flach ausgebildet sein. In diesem Fall wären die in der Verbindungsebene E angeordneten Krümmeranschlussstutzen für sich schon in verschiedenen Höhen platziert.

Ferner kann es vorteilhaft sein, wenn zwei oder drei oder vier Krümmeranschlussstutzen als Durchzug und/oder zwei oder drei oder vier Krümmeranschlussstutzen als Ausformung ausgebildet sind. Die Wahl der Anzahl der Durchzüge und Ausformungen ist beliebig und der gewünschten Architektur nach zu wählen.

Dabei kann es vorteilhafterweise vorgesehen sein, dass ein oder mehrere als Durchzug ausgebildete Krümmeranschlussstutzen in der ersten und/oder in der zweiten Schale angeordnet sind. Die Wahl der Schale ist ebenso beliebig. Grundsätzlich ist ein Durchzug auch in der oberen Schale möglich, sodass der Krümmer von oben in den Sammler geführt wird.

Von besonderer Bedeutung kann für die vorliegende Erfindung sein, wenn mindestens ein als Durchzug ausgebildeter Krümmeranschlussstutzen als Sammelanschlussstutzen für mindestens zwei Krümmerrohre ausgebildet ist. Somit ist eine noch kompaktere Bauweise möglich.

Im Zusammenhang mit der erfindungsgemäßen Ausbildung und Anordnung kann es von Vorteil sein, wenn mindestens ein als Ausformung ausgebildeter Krümmeranschlussstutzen als Sammelanschlussstutzen für mindestens zwei Krümmerrohre ausgebildet ist. Die Vorgehensweise ist für sich genommen ebenfalls aus dem Stand der Technik bekannt, bspw. aus der WO 00/47878 A1. In Verbindung mit einem Krümmerdurchzug ist jedoch eine sehr kompakte Bauweise realisierbar.

Vorteilhaft kann es auch sein, wenn der Auslassstutzen als Durchzug innerhalb nur einer der beiden Schalen ausgebildet ist und der ebenfalls als Durchzug ausgebildete Krümmeranschlussstutzen in derselben Schale angeordnet ist. Somit können die Durchzüge auf eine Schale beschränkt werden, was insgesamt zu einer sehr kompakten Bauweise führt.

Vorteilhaft kann es ferner sein, wenn die Schale bzw. die Schalen aus Blech gebildet ist oder als Gussteil ausgebildet ist. Blechschalen sind insgesamt weniger aufwendig und leichter als Gussschalen.

Zudem ist es vorteilhaft, wenn die Schalen und/oder die Krümmerrohre ein- oder zweiwandig ausgebildet sind. Mit der zweiwandigen Ausführung lassen sich luftspaltisolierte Krümmerrohre entsprechend verbinden.

Vorstehend genannte Vorteile sind auch für ein System bestehend aus einem vorstehend beschriebenen Sammler mit zwei miteinander verbundenen Schalen und/oder mit daran angeschlossenen Krümmerrohren gewährleistet.

Weitere Vorteile und Einzelheiten der Erfindung sind in den Patentansprüchen und in der Beschreibung erläutert und in den Figuren dargestellt. Es zeigen:
- Figur 1a: eine perspektivische Ansicht eines Sammlers mit vier Krümmerrohren und vier Stutzen;
- Figur 1b: eine Ausführungsform nach Figur 1a in der Ansicht von unten;
- Figur 2a: eine perspektivische Ansicht eines Sammlers mit vier Krümmerrohren und drei Stutzen;
- Figur 2b: eine Ausführungsform nach Figur 2a in der Ansicht von unten;
- Figur 3: eine zweiwandige Ausführung nach Figur 1.

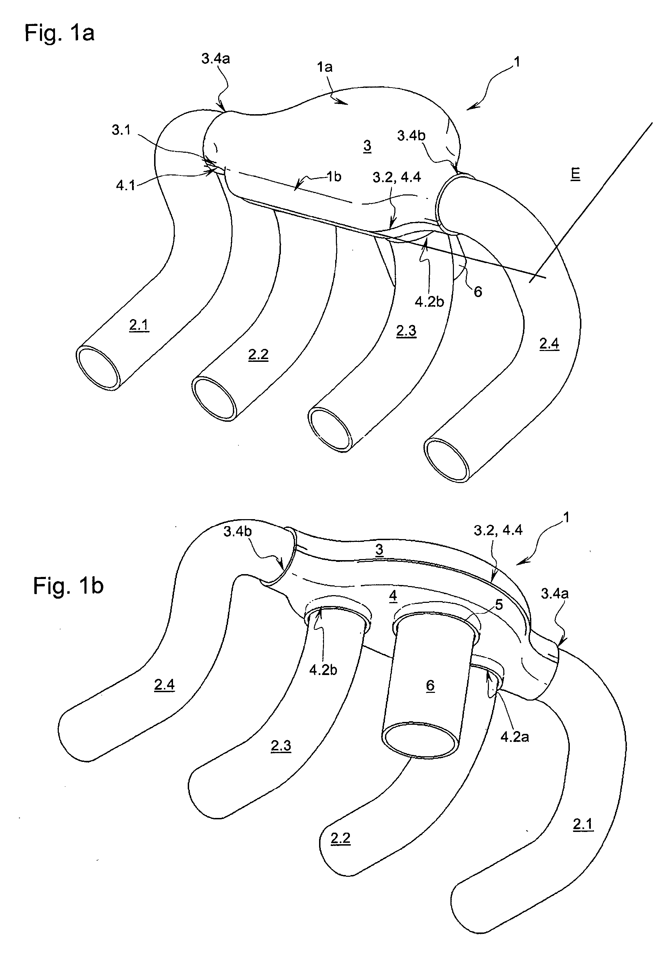

Nach der Ausführungsform gemäß Figur 1a sind vier Krümmerrohre 2.1 - 2.4 vorgesehen, die in einen Sammler 1 münden. Ferner ist ein Abgasrohr 6 für eine nicht weiter dargestellte Abgasanlage vorgesehen, das aus dem Sammler 1 austritt. Die vier Krümmerrohre 2.1 - 2.4 schließen an einen nicht dargestellten Krümmerflansch an.

Der Sammler 1 ist aus zwei Halbschalen 3, 4 aus Blech gebildet, die jeweils einen Schalenrand 3.2, 4.4 aufweisen, die zu einer Schalenverbindung 3.1, 4.1 in einer Verbindungsebene E stoff- oder formschlüssig und gasdicht verbunden sind. Es sind vier Krümmeranschlussstutzen 3.4a, 3.4b, 4.2a, 4.2b vorgesehen, an welchen das jeweilige Krümmerrohr 2.1 - 2.4 angeschlossen ist. Während die Krümmeranschlussstutzen 3.4a, 3.4b als halbkreisförmige Ausformung am Schalenrand 3.2, 4,4 innerhalb der jeweiligen Halbschalen 3, 4 gebildet sind, sind die Krümmeranschlussstutzen 4.2a, 4.2b als Durchzug innerhalb der einen, hier die untere Halbschale 4 ausgebildet. Mithin sind die Krümmeranschlussstutzen 3.4a, 3.4b in der Verbindungsebene E liegend angeordnet, während die Krümmeranschlussstutzen 4.2a, 4.2b unterhalb der Verbindungsebene E als Teil der unteren Blechschale 4 ausgebildet und dort positioniert sind.

Der Sammler 1 weist eine längliche Grundform auf, an dessen mit Bezug hinteren Teil 1a die Krümmeranschlussstutzen 3.4a, 3.4b, 4.2a, 4.2b nebeneinander gruppiert sind. An einem vorderen Teil 1b des Sammlers 1 sind der Durchzug 5 und das Abgasrohr 6 angeordnet. Die Krümmerrohre 2.2, 2.3 schließen somit von unten in einer Richtung rechtwinklig zur Verbindungsebene E an den Sammler 1 bzw. die untere Schale 4 an. Die übrigen Krümmerrohre 2.1, 2.4 schließen in einer Richtung parallel zur Verbindungsebene E an den Sammler 1 an.

Somit ist der notwendige Platzbedarf auf den Bereich in der Verbindungsebene E, also über den Umfang des Sammlers 1, und auf den Bereich unterhalb der Verbindungsebene E, unmittelbar in der Blechschale 4, aufgeteilt.

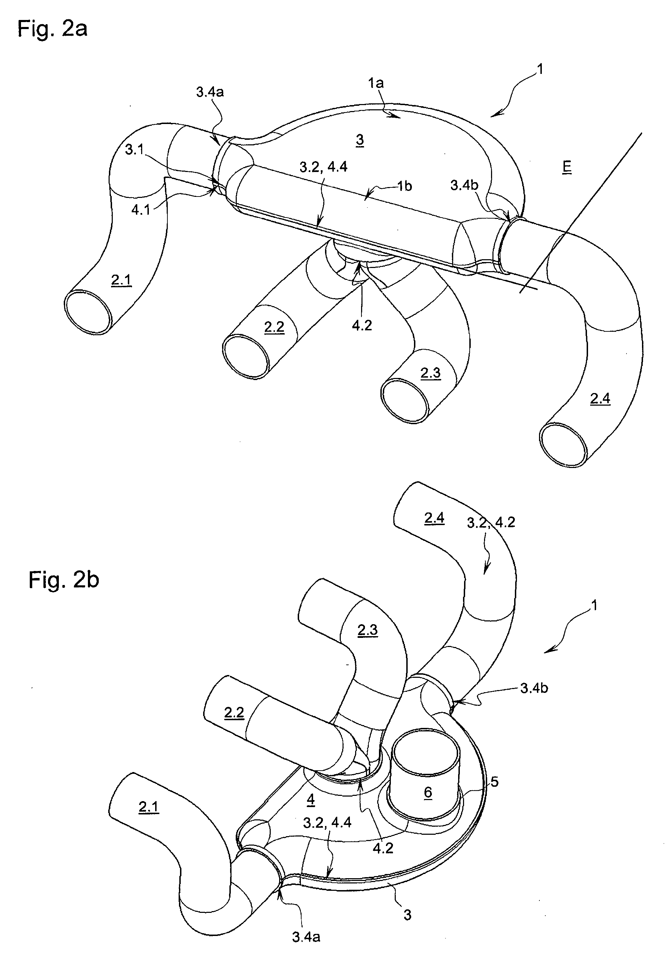

Nach der Ausführungsform gemäß Figur 2a, 2b ist innerhalb der unteren Halbschale 4 ein gemeinsamer Durchzug 4.2 für die Krümmerrohre 2.2, 2.3 vorgesehen. Die Krümmerrohre 2.2, 2.3 münden sozusagen zwei in eins im Sammler 1. Der so ausgebildete gemeinsame Krümmeranschlussstutzen 4.2 ist im Durchmesser größer als der jeweilige einzelne Krümmeranschlussstutzen 4.2a, 4.2b und etwas kleiner als der Durchzug 5 für das Abgasrohr 6.

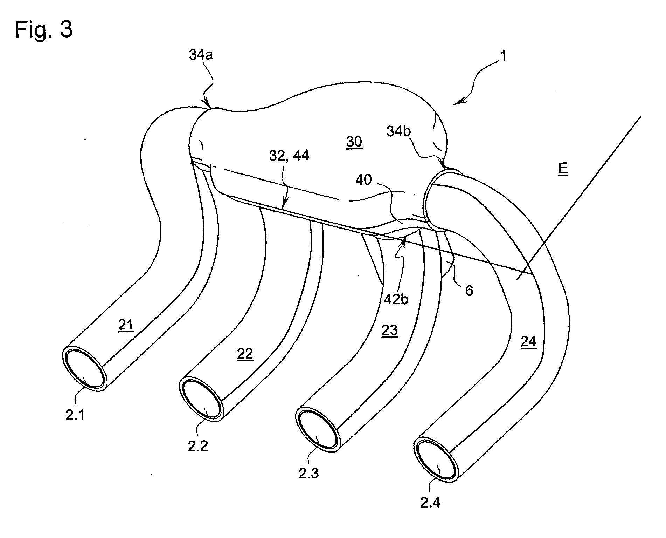

Nach Ausführungsform Figur 3 ist der Sammler 1, wie aus Figur 1 bekannt, in LSI-Ausführung zweiwandig ausgebildet.

Die beiden Außenschalen 30, 40 sind um die Innenschalen 3, 4 herum angeordnet und über den Schalenrand 32, 44 in der Verbindungsebene E stoff- oder formschlüssig und gasdicht verbunden. Die vier Krümmerrohre 21 - 24 sind als geteilte Außenschalen ausgebildet und umschließen die Krümmerrohre 2.1 - 2.4. Die Krümmeranschlussstutzen 34a, 34b sind ebenfalls als Ausformung am Schalenrand 32, 44 gebildet, während der Krümmeranschlussstutzen 42b als Durchzug innerhalb der zweiten Außenschale 40 ausgebildet ist. Das Abgasrohr 6 kann ebenfalls zweiwandig ausgeführt sein.

Da die hier beschriebenen Außenschalen gasdicht verbunden sind, ist eine gasdichte Verbindung zwischen den Halbschalen 3, 4 einerseits und den Krümmerrohren 2.1 - 2.4 andererseits nicht zwingend.

### Bezugszeichenliste

- 1: Sammler, Kopplungselement
- 1a: hinterer Teil
- 1b: vorderer Teil
- 2.1: Krümmerrohr
- 2.2: Krümmerrohr
- 2.3: Krümmerrohr
- 2.4: Krümmerrohr
- 3: erste Schale, Blechschale
- 3.1: Schalenverbindung
- 3.2: Schalenrand
- 3.4a: Krümmeranschlussstutzen, Ausformung
- 3.4b: Krümmeranschlussstutzen, Ausformung
- 4: zweite Schale, Blechschale
- 4.1: Schalenverbindung
- 4.2: gemeinsamer Krümmeranschlussstutzen, Durchzug
- 4.2a: Krümmeranschlussstutzen, Durchzug
- 4.2b: Krümmeranschlussstutzen, Durchzug
- 4.4: Schalenrand
- 5: Auslassstutzen, Durchzug
- 6: Abgasrohr
- 21: Krümmerrohr, Außenschale
- 22: Krümmerrohr, Außenschale
- 23: Krümmerrohr, Außenschale
- 24: Krümmerrohr, Außenschale
- 30: erste Außenschale
- 32: Schalenrand
- 34a: Krümmeranschlussstutzen, Ausformung
- 34b: Krümmeranschlussstutzen, Ausformung
- 40: zweite Außenschale
- 42b: Krümmeranschlussstutzen, Durchzug
- 44: Schalenrand
- E: Verbindungsebene

## Patentansprüche

1. Sammler (1) für mehrere abgasführende Krümmerrohre (2.1 - 2.4) eines Kfz mit einer ersten Schale (3) und einer zweiten Schale (4), die über eine eine Verbindungsebene E bildende Schalenverbindung (3.1, 4.1) dichtend miteinander verbindbar sind, mit mindestens einem Auslassstutzen (5) zum Anschließen an ein Abgasrohr (6) einer Abgasanlage (7) und mit mehreren Krümmeranschlussstutzen (3.4a, 3.4b, 4.2) zum Anschließen der Krümmerrohre (2.1 - 2.4), wobei der Auslassstutzen (5) als Durchzug innerhalb der jeweiligen Schale (3, 4) ausgebildet ist,
**dadurch gekennzeichnet,**
**dass** mindestens ein erster Krümmeranschlussstutzen (4.2) vorgesehen ist, der als Durchzug innerhalb nur einer der beiden Schalen (3, 4) ausgebildet ist.

2. Sammler (1) nach Anspruch 1,
**dadurch gekennzeichnet,**
**dass** mindestens ein zweiter Krümmeranschlussstutzen (3.4a, 3.4b) vorgesehen ist, der als Ausformung beider Schalen (3, 4) im Bereich eines Schalenrandes (3.2, 4.4) ausgebildet und in der Verbindungsebene E angeordnet ist.

3. Sammler (1) nach Anspruch 1 oder 2,
**dadurch gekennzeichnet,**
**dass** zwei oder drei oder vier Krümmeranschlussstutzen als Durchzug (4.2, 4.3) und/oder zwei oder drei oder vier Krümmeranschlussstutzen als Ausformung (3.4a, 3.4b) ausgebildet sind.

4. Sammler (1) nach einem der vorhergehenden Ansprüche,
**dadurch gekennzeichnet,**
**dass** ein oder mehrere als Durchzug (4.2, 4.3) ausgebildete Krümmeranschlussstutzen in der ersten und/oder in der zweiten Schale (3, 4) angeordnet sind.

5. Sammler (1) nach einem der vorhergehenden Ansprüche,
**dadurch gekennzeichnet,**
**dass** mindestens ein als Durchzug (4.2) ausgebildeter Krümmeranschlussstutzen als Sammelanschlussstutzen für mindestens zwei Krümmerrohre (2.1, 2.2) ausgebildet ist.

6. Sammler (1) nach einem der vorhergehenden Ansprüche,
**dadurch gekennzeichnet,**
**dass** mindestens ein als Ausformung (3.4a, 3.4b) ausgebildeter Krümmeranschlussstutzen als Sammelanschlussstutzen für mindestens zwei Krümmerrohre (2.1, 2.2) ausgebildet ist.

7. Sammler (1) nach einem der vorhergehenden Ansprüche,
**dadurch gekennzeichnet,**
**dass** der als Durchzug ausgebildete Auslassstutzen (5) und der als Durchzug ausgebildete Krümmeranschlussstutzen (4.2) innerhalb derselben Schale (4) angeordnet sind.

8. Sammler (1) nach einem der vorhergehenden Ansprüche,
**dadurch gekennzeichnet,**
**dass** die Schale (3, 4) aus Blech gebildet ist oder als Gussteil ausgebildet ist.

9. Sammler (1) nach einem der vorhergehenden Ansprüche,
**dadurch gekennzeichnet,**
**dass** die Schalen (3, 30, 4, 40) und/oder die Krümmerrohre (2.1 - 2.4, 21 - 24) ein- oder zweiwandig ausgebildet sind.

10. System bestehend aus einem Sammler (1) nach einem der vorhergehenden Ansprüche mit zwei miteinander verbundenen Schalen (3, 4) und mit daran angeschlossenen Krümmerrohren (2.1 - 2.4).

## Claims

1. A header (1) for several curved pipes (2.1 - 2.4) of a motor vehicle carrying exhaust gas, comprising a first shell (3) and a second shell (4), which can be connected to one another in a sealed manner by means of a shell connection (3.1, 4.1) that forms a connection plane E, at least one outlet port (5) for connecting to an exhaust pipe (6) of an exhaust gas system (7), and several curved-pipe connection ports (3.4a, 3.4b, 4.2) for connecting the curved pipes (2.1 - 2.4), wherein the outlet port (5) is designed as a passage within the respective shell (3, 4),
**characterized in that**
at least one first curved-pipe connection port (4.2) is provided, which is designed as a passage within only one of the two shells (3, 4).

2. The header (1) according to Claim 1,
**characterized in that**
at least one second curved-pipe connection port (3.4a, 3.4b) is provided, which is designed as a formed part of the two shells (3, 4) in the area of a shell edge (3.2, 4.4) and is arranged in the connection plane E.

3. The header (1) according to Claim 1 or 2,
**characterized in that**
two or three or four curved-pipe connection ports are designed as a passage (4.2, 4.3) and/or two or three or four curved-pipe connection ports are designed as a formed part (3.4a, 3.4b).

4. The header (1) according to any one of the preceding claims,
**characterized in that**
one or more curved-pipe connection ports designed as a passage (4.2, 4.3) are arranged in the first and/or in the second shell (3, 4).

5. The header (1) according to any one of the preceding claims,
**characterized in that**
at least one curved-pipe connection port designed as a passage (4.2) is designed as a collective connection port for at least two curved pipes (2.1, 2.2).

6. The header (1) according to any one of the preceding claims,
**characterized in that**
at least one curved-pipe connection port designed as a formed part (3.4a, 3.4b) is designed as a collective connection port for at least two curved pipes (2.1, 2.2).

7. The header (1) according to any one of the preceding claims,
**characterized in that**
the outlet port (5) designed as a passage and the curved-pipe connection port (4.2) designed as a passage are arranged within the same shell (4).

8. The header (1) according to any one of the preceding claims,
**characterized in that**
the shell (3, 4) is made of sheet metal or is designed as a casting.

9. The header (1) according to any one of the preceding claims,
**characterized in that**
the shells (3, 30, 4, 40) and/or the curved pipes (2.1 - 2.4, 21-24) are designed with one or two walls.

10. A system consisting of a header (1) according to any one of the preceding claims having two shells (3, 4) which are connected to one another and with curved pipes (2.1 - 2.4) connected thereto.

## Revendications

1. Collecteur (1) pour plusieurs tubes coudés (2.1 - 2.4) conduisant des gaz d'échappement d'un véhicule automobile, avec une première coquille (3) et une deuxième coquille (4) qui peuvent être raccordées l'une à l'autre de façon étanche par le biais d'un raccord de coquilles (3.1, 4.1) formant un plan de liaison E, avec au moins une tubulure de sortie (5) pour le raccordement à un tuyau d'échappement (6) d'un système d'échappement (7), et avec plusieurs tubulures de raccordement de coudes (3.4a, 3.4b, 4.2) pour le raccordement des tubes coudés (2.1 - 2.4), la tubulure de sortie (5) étant constituée en tant que passage à l'intérieur de la coquille (3, 4) respective,
**caractérisé en ce**
**qu'**il est prévu au moins un première tubulure de raccordement de coudes (4.2), qui est constituée en tant que passage à l'intérieur d'une seule des deux coquilles (3, 4).

2. Collecteur (1) selon la revendication 1,
**caractérisé en ce**
**qu'**il est prévu au moins une deuxième tubulure de raccordement de coudes (3.4a, 3.4b), qui est constituée en tant que forme des deux coquilles (3, 4) dans la zone d'un bord de coquille (3.2, 4.4) et qui est disposée dans le plan de liaison E.

3. Collecteur (1) selon la revendication 1 ou 2,
**caractérisé en ce que**
deux ou trois ou quatre tubulures de raccordement de coudes sont constituées en tant que passage (4.2, 4.3) et/ou **en ce que** deux ou trois ou quatre tubulures de raccordement de coudes sont constituées en tant que forme (3.4a, 3.4b).

4. Collecteur (1) selon une des revendications précédentes,
**caractérisé en ce**
**qu'**une ou plusieurs tubulures de raccordement de coudes constituées en tant que passage (4.2, 4.3) sont disposées dans la première et/ou dans la deuxième coquille (3, 4).

5. Collecteur (1) selon une des revendications précédentes,
**caractérisé en ce**
**qu'**au moins une tubulure de raccordement de coudes constituée en tant que passage (4.2) est constituée en tant que tubulure de raccordement de collecteur pour au moins deux tubes coudés (2.1, 2.2).

6. Collecteur (1) selon une des revendications précédentes,
**caractérisé en ce**
**qu'**au moins une tubulure de raccordement de coudes constituée en tant que forme (3.4a, 3.4b) est constituée en tant que tubulure de raccordement de collecteur pour au moins deux tubes coudés (2.1, 2.2).

7. Collecteur (1) selon une des revendications précédentes,
**caractérisé en ce que** la tubulure de sortie (5) constituée en tant que passage et la tubulure de raccordement de coudes (4.2) constituée en tant que passage sont disposées à l'intérieur de la même coquille (4).

8. Collecteur (1) selon une des revendications précédentes,
**caractérisé en ce que**
la coquille (3, 4) est formée en tôle ou est constituée en tant que pièce de fonderie.

9. Collecteur (1) selon une des revendications précédentes,
**caractérisé en ce que**
les coquilles (3, 30, 4, 40) et/ou les tubes coudés (2.1 - 2.4, 21 - 24) sont constitués avec une paroi ou deux parois.

10. Système composé d'un collecteur (1) selon une des revendications précédentes avec deux coquilles (3, 4) raccordées l'une à l'autre et avec des tubes coudés (2.1 - 2.4) qui y sont raccordés.
